# EUROPÄISCHE PATENTANMELDUNG

(11) **EP 2 881 814 A1**
(43) Veröffentlichungstag der Anmeldung: **10.06.2015**
(21) Anmeldenummer: 13196219.3
(22) Anmeldetag: 09.12.2013
(51) Int. Cl.: G05B 19/042, G06F 11/36

(54) **Verfahren zur Beeinflussung eines Steuerprogramms eines Steuergerätes**

(71) Anmelder: dSPACE digital signal processing and control engineering GmbH, 33102 Paderborn (DE)
(72) Erfinder: Dressler, Marc, 32805 Horn-Bad Meinberg (DE); Hufnagel, Thorsten, 33154 Salzkotten (DE); Kellers, Bastian, 33100 Paderborn (DE)

(57) **Zusammenfassung**

Verfahren zur Beeinflussung eines Steuerprogramms eines Steuergerätes, wobei das Steuerprogramm eine Vielzahl von ersten Funktionen aufweist, wobei wenigstens eine der ersten Funktionen für die Steuerung eines Aktuators ausgebildet ist, und eine Vielzahl von Variablen vorgesehen sind und jeder der Variablen eine Speicheradresse zugeordnet ist, wobei zwischen den Variablen und den ersten Funktionen eine vorgegebene Zuordnung ausgebildet ist, und das Steuergerät einen Prozessor mit einer Vielzahl von Rechenkernen aufweist, und in einem ersten Rechenkern das Steuerprogramm mit den ersten Funktionen ausgeführt wird, dadurch gekennzeichnet, dass während der Ausführung des Steuerprogramms in einem zweiten Rechenkern eine zweite Funktion abgearbeitet wird, wobei die zweite Funktion wenigstens teilweise eine zu dem Steuerprogramm unterschiedlichen Programmkode aufweist, und mittels der zweiten Funktion ein Wert einer der ersten Funktionen zugeordneten Variablen verändert wird und anschließend auf den geänderten Wert von dem Steuerprogramm zugegriffen wird.

## Beschreibung

Die Erfindung betrifft ein Verfahren zur Beeinflussung eines Steuerprogramms eines Steuergerätes gemäß dem Oberbegriff des Patentanspruchs 1.

Steuergeräte werden in großer Zahl in vielen Bereichen der Technik eingesetzt. Ein besonders wichtiger Anwendungsbereich ist unter anderem die Motor-, Getriebe- und Fahrwerksteuerung bei den Automobilen und die Steuerung von Triebwerken bei Flugzeugen. Bei derartigen Steuergeräten ist im Allgemeinen der Programmkode in binärer Form abgelegt. Eine Änderung des jeweiligen vorzugsweise in einem Festwertspeicher abgelegten Steuerprogramms ist sehr aufwändig und kostenintensiv.

Ein Verfahren zur Beeinflussung eines Steuergerätes ist aus der Druckschrift DE 10 2004 027 033 A1 bekannt.

Vor diesem Hintergrund besteht die Aufgabe der Erfindung darin, ein Verfahren zur Beeinflussung eines Steuerprogramms eines Steuergerätes anzugeben, das den Stand der Technik weiterbildet.

Die Aufgabe wird durch ein Verfahren zur Beeinflussung eines Steuerprogramms eines Steuergerätes mit den Merkmalen des Patentanspruchs 1 gelöst. Vorteilhafte Ausgestaltungen der Erfindung sind Gegenstand von Unteransprüchen.

Gemäß dem ersten Gegenstand der Erfindung wird ein Verfahren zur Beeinflussung eines Steuerprogramms eines Steuergerätes bereitgestellt, wobei das Steuergerät einen ersten Speicher zur Aufnahme des Steuerprogramms aufweist, und das Steuerprogramm eine Vielzahl von ersten Funktionen aufweist, wobei wenigstens eine der ersten Funktionen für die Steuerung eines Aktuators ausgebildet ist, und des Weiteren eine Vielzahl von Variablen vorgesehen sind und jeder der Variablen eine Speicheradresse zugeordnet ist, wobei zwischen den Variablen und den ersten Funktionen eine vorgegebene Zuordnung ausgebildet ist, und das Steuergerät einen Prozessor mit einer Vielzahl von Rechenkernen aufweist, und in einem ersten Rechenkern das Steuerprogramm mit den ersten Funktionen ausgeführt wird, wobei während der Ausführung des Steuerprogramms in einem zweiten Rechenkern eine zweite Funktion abgearbeitet wird, wobei die zweite Funktion wenigstens teilweise eine zu dem Steuerprogramm unterschiedlichen Programmkode aufweist, und mittels der zweiten Funktion ein Wert einer der ersten Funktionen zugeordneten Variablen verändert wird und anschließend auf den geänderten Wert von dem Steuerprogramm zugegriffen wird.

Ein Vorteil des Verfahrens zur Beeinflussung eines Steuerprogramms eines Steuergerätes ist es, dass auch bei älteren Steuergeräten, welche bereits zur Steuerung von Motoren verwendet werden, sich Änderungen an den Steuerprogrammen durchführen lassen. In vorteilhafter Weise wird hierbei bei den Steuergeräten, welche Prozessoren mit mehreren Rechenkernen aufweisen, ein Rechenkern, der nicht mit der Abarbeitung des Steuerprogramms beaufschlagt ist, verwendet, um mittels einer zweiten Funktion eine oder mehrere Variablenwerte einer als erste Funktion bezeichnete Funktion des Steuerprogramms zu verändern. Dabei ist es unerheblich, ob der genannte Rechenkern von vornherein nicht mit der Abarbeitung des Steuerprogramms beauschlagt ist oder ob das Steuergerät vor der Ausführung des erfindungsgemäßen Verfahrens derart entsprechend manipuliert wird. Beispielsweise könnte ein Rechenkern zunächst mit einer redundanten Ausführung des Steuerprogramms beaufschlagt sein, das während des Entwicklungsprozesses nicht benötigt wird und deshalb im Rahmen des Entwicklungsprozesses zur Durchführung des erfindungsgemäßen Verfahrens ausgeschaltet wird. Es versteht sich, dass die zweite Funktion nicht Teil des Steuerprogramms ist. Untersuchungen haben gezeigt, dass sich mit dem vorliegenden Verfahren die Auswirkungen der Veränderung des Steuerprogramms einfach und kostengünstig vorzugsweise in Echtzeit durchführen lassen. Gerade in dem Bereich des Tunings von Motoren ermöglicht das Verfahren einen einfachen und kostengünstigen sehr weitgehenden Eingriff in das Steuerprogramm. Es versteht sich, dass sich mit dem vorliegenden Verfahren die Variablenwerte auch von einer Vielzahl von ersten Funktionen verändern lassen.

In einer Weiterbildung werden mittels eines Zusatzprogrammteils und / oder einer Überwachungseinheit Aufrufe von einen oder mehreren ersten Funktionen detektiert, wobei der Zusatzprogrammteil auf dem zweiten Rechenkern implementiert und abgearbeitet wird und / oder das Steuerprogramm durch den Zusatzprogrammteil ergänzt wird. In einer andern Ausführungsform ist die Überwachungseinheit als Schnittstelleneinheit ausgeführt. Eine Ausführungsform einer Schnittstelleneinheit ist ein sogenanntes Beeinflussungsgerät. In einer bevorzugten Weiterbildung ist die Überwachungseinheit als eine von dem Steuergerät getrennte Einheit ausgebildet. Des Weiteren ist es bevorzugt, wenn die Überwachungseinheit ein fest-verdrahtetes Programm zur Detektion von den Aufrufen der ersten Funktion aufweist. Der Vorteil des fest-verdrahteten Programms ist, dass das Programm sich schnell und zuverlässig von der Überwachungseinheit abarbeiten lässt. Untersuchungen haben gezeigt, dass sich die Aufrufe der ersten Funktion auch ohne genaue Kenntnis des Quellcodes des Steuerprogramms detektieren lassen. Es sei angemerkt, dass sich die Überwachungseinheit sowohl als eine Software-Lösung als auch als eine Hardware-Lösung als auch als eine Kombination von beiden Lösungen ausführen lässt.

Gemäß einer anderen Ausführungsform erfolgt die Abarbeitung der zweiten Funktion wenigstens teilweise parallel zu der Abarbeitung einer oder mehrerer der ersten Funktionen. Es versteht sich, dass bei einem Vorhandensein von mehreren zweiten Rechnerkernen, beispielweise bei einem Einsatz von sogenannten Quadcore-Prozessoren, die Abarbeitung der zweiten Funktion wenigstens teilweise parallel in mehreren zweiten Rechenkernen durchgeführt werden kann. Ferner ist es bevorzugt, die Abarbeitung der zweiten Funktion durch einen Triggerbefehl zu starten.

In einer anderen Weiterbildung wird von der zweiten Funktion zu einem ersten Zeitpunkt der Wert einer der ersten Funktionen zugeordneten Variable berechnet oder aus einer Speicheradresse eingelesen und nach der Berechnung oder der Änderung des Wertes zu einem zweiten Zeitpunkt der berechnete oder geänderte Wert in die der Variablen zugeordneten Speicheradresse zurückgeschrieben. In einer alternativen Ausführungsform werden zu dem ersten Zeitpunkt die Werte von mehreren einer der ersten Funktionen zugeordneten Variablen berechnet und / oder die Werte aus den Variablen jeweils zugeordneten Speicheradressen eingelesen und nach der Berechnung oder nach der Änderung der Werte die Werte in die der Variablen zugeordneten Speicheradressen oder alternativ in Speicheradressen von weiteren Variablen zurückgeschrieben. Anschließend werden zu einem dritten Zeitpunkt von dem Steuerprogramm die Werte aus den der Variablen zugeordneten Speicheradressen ausgelesen, wobei der zweite Zeitpunkt später als der erste Zeitpunkt und der dritte Zeitpunkt später als der zweite Zeitpunkt liegt. Hierdurch wird sichergestellt, dass insbesondere bei zeitkritischen Anwendungen, das Steuerprogramm mit den neuen Werten der Variablen weiterarbeitet, d.h. eine Konsistenz der Daten in den Speicherbereichen gewährleistet wird, indem das Schreiben der geänderten Werte vor dem Lesen der Werte durch das Steuerprogramm beendet wird.

In einer bevorzugten Ausführungsform wird von der zweiten Funktion zu einem ersten Zeitpunkt der Wert aus einer der Variablen zugeordneten Speicheradresse und / oder aus einer zugeordneten Speicheradresse eines Pufferbereichs, in denen sich ein Abbild der Werte der Variablen befindet, eingelesen, wobei der erste Zeitpunkt nach der Detektion des Funktionsaufrufs der ersten Funktion liegt und der erste Zeitpunkt von der Überwachungseinheit und / oder des Kontrollprogramms und / oder des Zusatzprogrammteils ermittelt wird und von der Überwachungseinheit und / oder des Kontrollprogramms und / oder des Zusatzprogrammteils sicher gestellt wird, dass sich der Wert der Variablen an der zugeordneten Speicheradresse in dem Zeitraum zwischen dem Aufruf der ersten Funktion und dem ersten Zeitpunkt nicht verändert. Hierdurch wird sichergestellt, dass die Anfangswerte der ersten Funktion und der zweiten Funktion nicht unterscheiden, d.h. konsistent sind.

In einer anderen Ausführungsform ist vorgesehen, dass mittels der Überwachungseinheit und / oder des Kontrollprogramms und / oder des Zusatzprogrammteils die Beeinflussung der Werte der Variablen durch die zweite Funktion derart synchronisiert wird, dass mittels des Steuerprogramms auf die Werte der Variablen nach der Abarbeitung der zweiten Funktion oder nach den mittels der zweiten Funktion durchgeführten Änderungen zugegriffen wird.

Des Weiteren ist es vorteilhaft, dass mittels der Überwachungseinheit und / oder des Kontrollprogramms und / oder des Zusatzprogrammteils die Verteilung der zweiten Funktion auf ein oder mehrere zweite Rechenkerne gesteuert wird.

Gerade bei kritischen Werten, beispielsweise zur Steuerung einer Lenkung oder von automatischen Bremsvorgängen, werden die Berechnungen von Variablenwerten parallel und mehrfach durchgeführt und teilweise alle vorhandenen Rechenkerne verwendet. Hierdurch kann es vorteilhaft sein, mittels der Überwachungseinheit die zweite Funktion auf einer externen Berechnungseinheit abzuarbeiten. Es versteht sich, dass in einer Weiterbildung auch mehrere zweite Funktionen vorgesehen sind und in einer Weiterbildung auch mehrere der zweiten Funktionen auf der externen Berechnungseinheit abgearbeitet werden.
In einer anderen Weiterbildung ist die zweite Funktion in einer Endlosschleife integriert oder eine mehrfache Abarbeitung der zweiten Funktion wird mittels eines Triggerimpulses gestartet.

In einer Ausführungsform wird mittels einer Überwachungseinheit und / oder des Kontrollprogramms ein Abbild der Werte der Variablen, die identisch zu den Werten der Variablen zum Zeitpunkt des Aufrufes der ersten Funktion sind, in den Pufferbereich abgelegt.

In einer anderen Weiterbildung weisen die mehreren zweiten Funktionen unterschiedliche Prioritäten auf, wobei mittels der Überwachungseinheit und / oder des Kontrollprogramms und / oder des Zusatzprogrammteils die Verteilung der zweiten Funktionen auf ein oder mehrere zweite Rechenkerne anhand der unterschiedlichen Prioritäten der zweiten Funktionen gesteuert wird und / oder eine oder mehrere zweite Funktionen auf einem oder mehreren zweiten Rechenkernen pausiert werden, um eine oder weitere zweite Funktionen mit einer höheren Priorität auf den zweiten Rechenkernen zu bearbeiten.

In einer Ausführungsform wird mittels der Überwachungseinheit und / oder des Kontrollprogramms und / oder des Zusatzprogrammteils ein zweiter Rechenkern nur dann gestartet, wenn der ausgewählte zweite Rechenkern eine zweite Funktion bearbeiten soll.

Die Erfindung wird nachfolgend unter Bezugnahme auf die Zeichnungen näher erläutert. Hierbei werden gleichartige Teile mit identischen Bezeichnungen beschriftet. Die dargestellte Ausführungsformen sind stark schematisiert, d.h. die Abstände und laterale und vertikale Erstreckung sind nicht maßstäblich und weisen, sofern nicht anders angegeben, auch keine ableitbare geometrische Relation zueinander auf. Darin zeigen die:
- Figur 1: eine erste erfindungsgemäße Ausführungsform mit dem internen Aufbau eines Steuergerätes in Verbindung mit einem Sensor und einem Aktuator,
- Figur 2: eine zweite erfindungsgemäße Ausführungsform mit dem internen Aufbau eines Steuergerätes in Verbindung mit einem Sensor und einem Aktuator,
- Figur 3: eine dritte erfindungsgemäße Ausführungsform mit dem internen Aufbau eines Steuergerätes in Verbindung mit einem Sensor und einem Aktuator,
- Figur 4: eine erste Ausführungsform eines Zeitdiagramms mit verschiedenen Lese- und Schreiboperationen,
- Figur 5: eine zweite Ausführungsform eines Zeitdiagramms mit verschiedenen Lese- und Schreiboperationen,
- Figur 6: eine dritte Ausführungsform eines Zeitdiagramms mit verschiedenen Lese- und Schreiboperationen,
- Figur 7: eine vierte Ausführungsform eines Zeitdiagramms mit verschiedenen Lese- und Schreiboperationen,
- Figur 8: eine vierte erfindungsgemäße Ausführungsform mit dem internen Aufbau eines Steuergerätes in Verbindung mit einem Sensor und einem Aktuator und einer Überwachungseinheit.

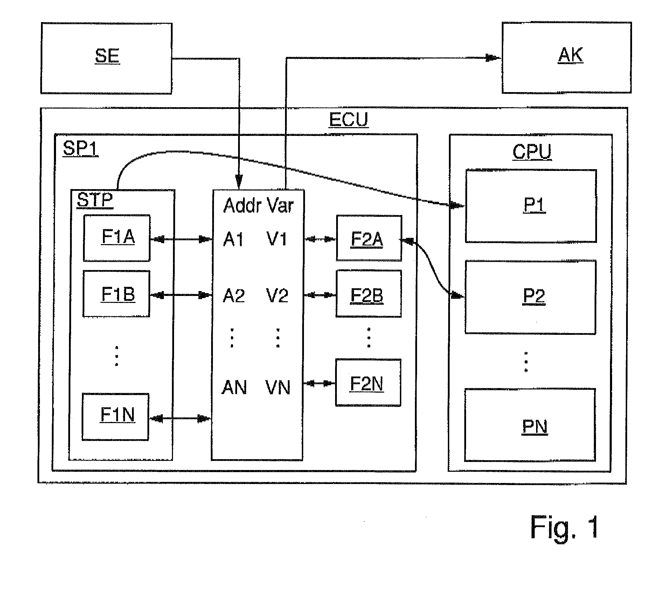

Die Abbildung der Figur 1 zeigt ein Steuergerät ECU aufweisend einen Speicher SP1 und einen Prozessor CPU und einen mit dem Steuergerät in einer elektrischen Wirkverbindung stehenden Sensor SE und einen mit dem Steuergerät ECU in einer elektrischen Wirkverbindung stehenden Aktuator AK. Der Speicher SP1 beinhaltet ein Steuerprogramm STP mit dem binären Programmkode, wobei das Steuerprogramm STP eine Vielzahl von ersten Funktion F1A, F1B... F1N umfasst. Es versteht sich, dass sich der Speicher SP1 aus unterschiedlichen Speicher-Arten wie beispielsweise Flüchtigwertspeicher oder Festwertspeicher ausbilden lässt. Des Weiteren enthält der Speicher eine Vielzahl von zweiten Funktionen F2A, F2B ... F2N und eine Vielzahl von Variablen V1, V2 und V2 auf den Speicheradressen A1, A2 ... AN.

Es versteht sich, dass der Programmkode der zweiten Funktionen F2A, F2B ... F2N wenigstens in Teilen unterschiedlich zu dem Programmkode der ersten Funktionen F1A, F1B ... F1N ist. Der Prozessor CPU enthält neben einem ersten Rechenkern P1 und einem zweiten Rechenkern P2 eine weitere Vielzahl von Rechenkernen bis zu dem Rechenkern PN. Außerdem weist der Prozessor eine nicht dargestellte Schnittstelleneinheit für eine Kommunikation mit einer außerhalb des Steuergerätes ECU ausgebildeten Überwachungseinheit - ebenfalls nicht dargestellt, auf. In der Steuereinheit ECU wird in dem ersten Rechenkern P1 der CPU ein Steuerprogramm abgearbeitet. Das Steuerprogramm (STP) liegt als binärer Programmkode vor. Das Steuerprogramm umfasst eine Vielzahl von Aufrufen von ersten Funktionen F1A, F1B, ...F1N, die während der Abarbeitung des Steuerprogramms aufgerufen werden. Eine bevorzugte Aufgabe wenigstens eines Teils der ersten Funktionen F1A, F1B, ...F1N ist das Einlesen von Daten des Sensors SE und / oder das Einlesen von Daten weiterer Sensoren (nicht dargestellt) und / o-der die Steuerung von dem Aktuator AK und / oder das Steuern weiterer Aktuatoren, nicht dargestellt. Ferner sind den ersten Funktionen F1A, F1B, ...F1N innerhalb des Speichers SP1 Adressen A1, A2, ..., AN mit Variablen V1, V2, ...VN zugeordnet. Bei einem Aufruf der ersten Funktionen F1A, F1B, ...F1N werden die den jeweiligen Funktionen F1A, F1B, ...F1N zugeordneten Variablen V1, V2, ...VN gelesen oder geschrieben, anders ausgedrückt werden die mit den Variablen verknüpften Werte aus der jeweiligen Speicheradresse gelesen oder in die jeweilige Speicheradresse geschrieben.

Während des Ausführens des Steuerprogramms in dem ersten Rechenkern P1 wird in dem zweiten Rechenkern P2 ein Überwachungsprogramm abgearbeitet. Das Überwachungsprogramm detektiert die jeweiligen Aufrufe der ersten Funktionen F1A, F1B,... F1N und startet zu einem vorgegebenen Zeitpunkt eine der zweiten Funktionen F2A, F2B, ... F2N. Hierdurch wird mittels der zweiten Funktionen F2A, F2B,.... F2N wenigstens ein Wert einer der ersten Funktionen F1A, F1B, ...F1N zugeordneten Variablen V1, V2,....VN verändert. Anschließend wird von dem Steuerprogramm auf den geänderten Wert zugegriffen. Hierdurch lassen sich die Werte der Variablen V1, V2, ... VN mittels den zweiten Funktionen F2A, F2B, ... F2N manipulieren und beispielsweise den Aktuator AK anders beeinflussen und / oder die Werte des Sensors SE zu einem anderen Zeitpunkt auslesen oder die Daten von Sensor SE manipulieren.

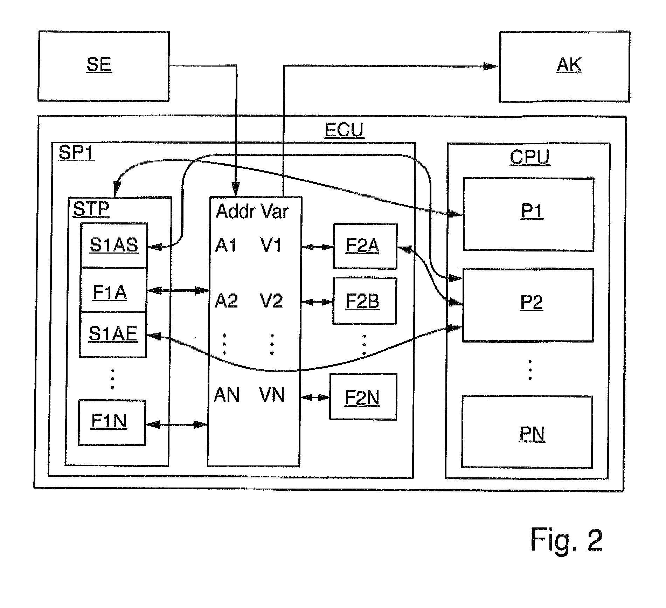

Die Abbildung der Figur 2 zeigt eine zweite Ausführungsform des erfindungsgemäßen Verfahrens. Im Folgenden werden nur die Unterschiede zu der Darstellung in der Figur 1 erläutert. Das Steuerprogramm STP umfasst für die erste Funktion F1A einen ersten Zusatzprogrammteil S1AS, mit dem der Aufruf der ersten Funktion F1A vorzugsweise mittels eines Triggerimpulses dem Überwachungsprogramm in dem zweiten Rechenkern P2 mitgeteilt wird, und einen zweiten Zusatzprogrammteil S1AE, mit dem das Ende der ersten Funktion F1A vorzugsweise mittels eines Triggerimpulses dem Überwachungsprogramm in dem zweiten Rechenkern P2 mitgeteilt wird und/oder die Ausführung des weiteren Programmcodes auf dem ersten Rechenkern P1 mit der Beendigung der zweiten Funktion F2A auf dem zweiten Rechenkern P2 synchronisiert wird. In dem zweiten Rechenkern wird zwischen dem ersten Triggerimpuls und dem zweiten Triggerimpuls die zweite Funktion F2A ausgeführt. Mittels der beiden Triggerimpulse lässt sich die Verarbeitung des Steuerprogramms und die Abarbeitung der zweiten Funktion F2A synchronisieren, so dass bei einem Lesen oder einem Schreiben der Werte für die der ersten Funktion F1A zugeordneten Werte der Variablen V1 Dateninkonsistenzen vermieden werden.

In einer weiteren bevorzugten Ausführungsform wartet der Zusatzprogrammteil S1AE auf die Berechnungsergebnisse der zweiten Funktion F2A und schreibt, je nach Konfiguration, entweder die Berechnungsergebnisse der zweiten Funktion F2A oder die eigenen Berechnungsergebnisse in die Adressen der jeweiligen Variablen oder lässt sie durch Aufruf einer gesonderten Funktion, die auf dem ersten Prozessorkern P1 oder dem zweiten Prozessorkern P2 ausgeführt werden kann, dorthin schreiben.

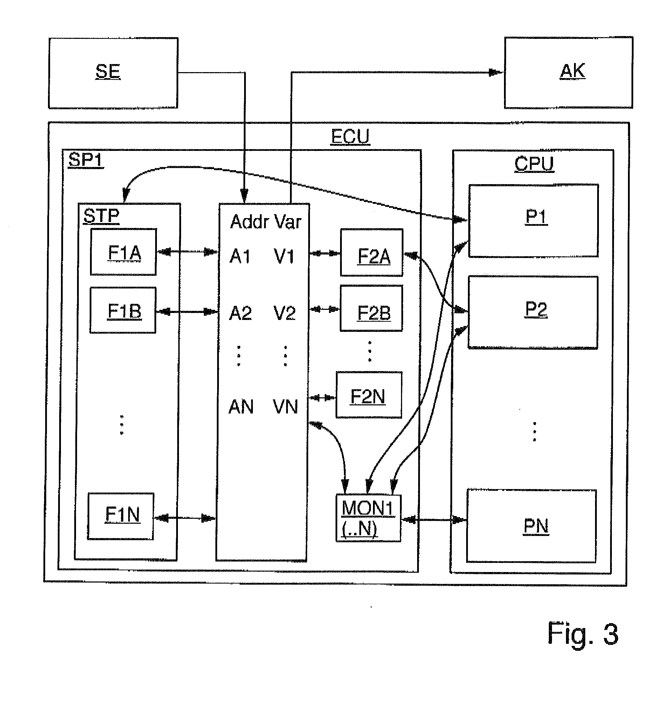

Die Abbildung der Figur 3 zeigt eine dritte Ausführungsform des erfindungsgemäßen Verfahrens. Im Folgenden werden nur die Unterschiede zu der Darstellung in der Figur 1 erläutert. Der Zusatzprogrammteil ist als Kontrollprogramm MON1 in dem Speicher SP1 ausgebildet. Es ist bevorzugt, das Kontrollprogramm MON1 auf dem zweiten Rechenkern P2 und dem weiteren Rechenkern PN ablaufen zu lassen. Mittels des Kontrollprogramm MON1 werden die Funktionsaufrufe der ersten Funktionen F1A, F1B,... F1N bei der Ausführung des Steuerprogramms STP in dem ersten Rechenkern P1 detektiert und zu einem vorgegebenen Zeitpunkt die Ausführung der Funktion F2A in dem Rechenkern P2 veranlasst.

Es sei angemerkt, dass in einer alternativen Ausführungsform mehrere Kontrollprogrammteile MON1, MON2,...MONN ausgebildet sind, wobei die mehreren Kontrollprogrammteile MON1, MON2,...MONN jeweils auf unterschiedlichen Prozessorkernen laufen können. Vorteilhaft ist, dass insbesondere bei einem Überwachen mittels zwei getrennten Kontrollprogrammteile MON1 und MON2, welche jeweils auf getrennten zweiten Rechenkernen laufen, zwei "erste Funktionen", welche auf einem oder alternativ ebenfalls auf zwei "ersten" Kernen laufen, parallel überwachen können.

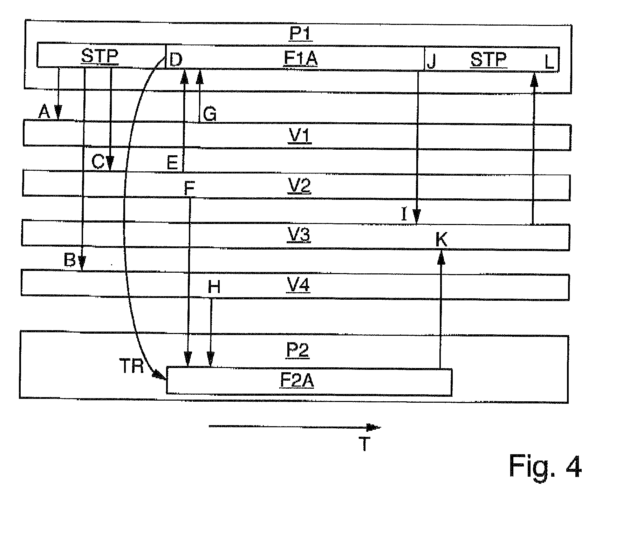

Die Abbildung der Figur 4 zeigt in einem ersten Beispiel ein Zeitdiagramm des Ablaufs der verschiedenen Lese- und Schreiboperationen auf die einzelnen Bereiche des Speichers SP1 ausgehend von dem ersten Rechenkern P1 und dem zweiten Rechenkern P2. Entlang der Y-Achse sind die einzelnen Bereiche des Speichers SP1 und die beiden Rechenkerne P1 und P2 aufgetragen und entlang der X-Achse die Zeit T aufgetragen. Der Speicher SP1 umfasst vier Speicherbereiche, die jeweils eindeutig anhand der jeweiligen Adressen einer der vier Variablen V1, V2, V3 und V4 zugeordnet sind. In den einzelnen Speicherbereichen sind jeweils die Werte der Variablen gespeichert, d.h. in dem Speicherbereich der ersten Variablen V1 befindet sich der Wert der ersten Variablen V1 und in dem Speicherbereich der zweiten Variablen V2 befindet sich der Wert der zweiten Variablen V2 und in dem Speicherbereich der dritten Variablen V3 befindet sich der Wert der dritten Variablen V3 und in dem Speicherbereich der vierten Variablen V4 befindet sich der Wert der vierten Variablen V4.

Es zeigt sich, dass in dem ersten Rechenkern P1 das Steuerprogramm STP ausgeführt wird, wobei das Steuerprogramm STP die erste Funktion F1A umfasst. Während des Zeitraums, in dem das Steuerprogramm STP in dem ersten Rechenkern P1 ausgeführt wird, wird in dem zweiten Rechenkern P2 die zweite Funktion F2A abgearbeitet. Zu einem Zeitpunkt A wird von dem Steuerprogramm STP ein Wert in den Speicherbereich der ersten Variablen V1 und zu einem Zeitpunkt B ein Wert in den Speicherbereich der vierten Variablen V4 und zu einem Zeitpunkt C ein Wert in den Speicherbereich der zweiten Variablen V2 geschrieben. Zu einem Zeitpunkt D wird von dem Steuerprogramm mit der Abarbeitung der ersten Funktion F1A begonnen. Mit der Abarbeitung der ersten Funktion F1A wird unmittelbar folgend mittels eines Triggerimpulses TR auch mit der Ausführung der zweiten Funktion F2A begonnen, d. h. der Triggerimpuls TR synchronisiert die Ausführung der zweiten Funktion F2A in Bezug auf den Beginn der ersten Funktion F1A.

Mittels der ersten Funktion F1A wird zu einem Zeitpunkt E der Wert der zweiten Variablen V2 aus dem Speicherbereich eingelesen und zu einem wenig späteren Zeitpunkt F wird von der zweiten Funktion F2A ebenfalls der Wert der zweiten Variablen V2 aus dem Speicherbereich eingelesen. Zu einem Zeitpunkt G wird mittels der ersten Funktion F1A der Wert der ersten Variablen V1 aus dem Speicherbereich eingelesen, wobei zu einem Zeitpunkt H mittels der zweiten Funktion F2A der Wert der vierten Variablen V4 aus dem Speicherbereich eingelesen wird. Anschließend wird kurz vor Ende der ersten Funktion F1A an einem Zeitpunkt J, mittels der ersten Funktion F1A zu einem Zeitpunkt I, der Wert der dritten Variablen V3 in den zugeordneten Speicherbereich geschrieben. Zu einem Zeitpunkt K nach dem Ende der ersten Funktion F1A an dem Zeitpunkt J, wird mittels der zweiten Funktion F2A der Wert der dritten Variablen V3 in den zugeordneten Speicherbereich geschrieben. Hierdurch wird also der Wert der dritten Variablen V3 alleine von der zweiten Funktion F2A bestimmt und die erste Funktion F1A wenigstens hinsichtlich des Wertes der dritten Variablen V3 effektiv ersetzt. Schließlich wird von dem Steuerprogramm STP zu einem Zeitpunkt L der Wert der dritten Variablen V3 eingelesen und weiterverarbeitet.

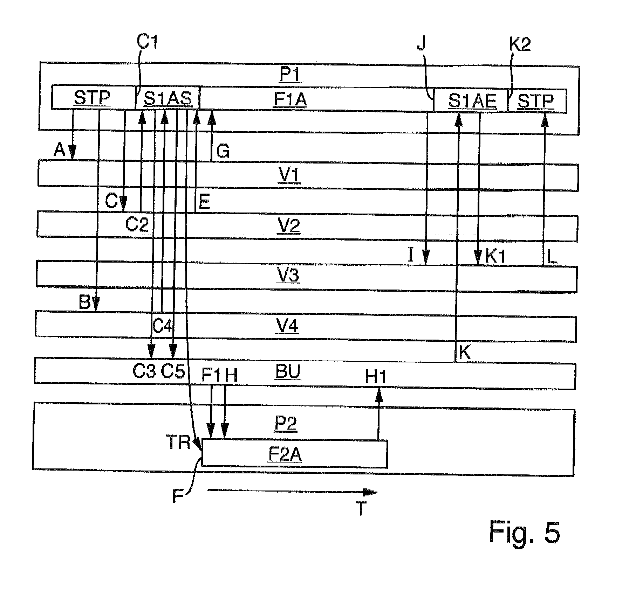

Die Abbildung der Figur 5 zeigt in einem zweiten Beispiel ein weiteres Zeitdiagramm des Ablaufs der verschiedenen Lese- und Schreiboperationen auf die einzelnen Bereiche des Speichers SP1 ausgehend von dem ersten Rechenkern P1 und dem zweiten Rechenkern P2. Im Folgenden werden nur die Unterschiede zu der Darstellung in der Figur 4 erläutert. Der Speicher SP1 weist zusätzlich einen Pufferbereich BU auf. Der Pufferbereich BU wird im Allgemeinen auch Zwischenspeicherbereich genannt. Das Steuerprogramm STP enthält vor der ersten Funktion F1A den ersten Zusatzprogrammteil S1AS und nach der ersten Funktion F1A den zweiten Zusatzprogrammteil S1AE. Die beiden Zusatzprogrammteile S1AS und S1AE sind unmittelbar mit dem Anfang der ersten Funktion F1A und mit dem Ende der ersten Funktion F1A verknüpft. Die Abarbeitung des ersten Zusatzprogrammteils S1AS beginnt zu einem Zeitpunkt C1 und zu einem Zeitpunkt C2 wird mittels des ersten Zusatzprogrammteils S1AS der Wert der zweiten Variablen V2 aus dem zugeordneten Speicherbereich gelesen und zu einem Zeitpunkt C3 der Wert einer ersten Puffervariablen in den Pufferbereich BU geschrieben. Ferner wird mittels des ersten Zusatzprogrammteils S1AS zu einem Zeitpunkt C4 der Wert der vierten Variablen V4 aus dem den zugeordneten Speicherbereich gelesen und zu einem Zeitpunkt C5 der Wert einer zweiten Puffervariablen in den Pufferbereich BU geschrieben. Mittels des ersten Zusatzprogrammteils S1AS wird zu dem Zeitpunkt F die Abarbeitung der zweiten Funktion F2A angestoßen.

Anschließend wird mittels der zweiten Funktion F2A zu einem Zeitpunkt F1 aus dem Pufferspeicher BU die erste Puffervariable und zu dem Zeitpunkt H die zweite Puffervariable eingelesen und zu einem Zeitpunkt H1 der Wert der dritten Puffervariablen in den Pufferspeicher BU geschrieben. Zu dem Zeitpunkt K wird von dem zweiten Zusatzprogrammteils S1AE aus dem Pufferspeicher BU der Wert der dritten Puffervariablen ausgelesen und zu einem Zeitpunkt K1 in den Speicherbereich der dritten Variablen V3 geschrieben. Der zweite Zusatzprogrammteil S1AE ist zu einem Zeitpunkt K2 beendet.

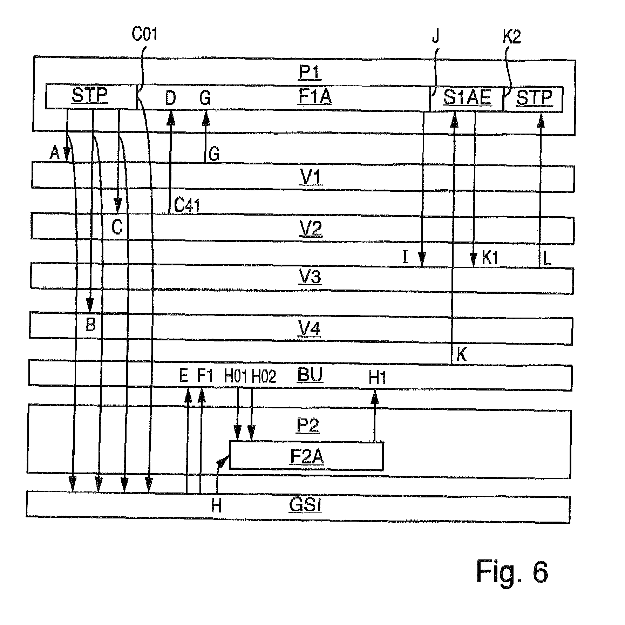

Die Abbildung der Figur 6 zeigt in einem dritten Beispiel ein weiteres Zeitdiagramm des Ablaufs der verschiedenen Lese- und Schreiboperationen auf die einzelnen Bereiche des Speichers SP1 ausgehend von dem ersten Rechenkern P1 und dem zweiten Rechenkern P2. Im Folgenden werden nur die Unterschiede zu der Darstellung in der Figur 4 und der Darstellung der Figur 5 erläutert. Vorliegend werden wichtige Aufrufe und Schreib-/Leseoperationen von einer als Beeinflussungseinheit ausgebildeten Überwachungseinheit GSI detektiert und gesteuert.

Das Steuerprogramm STP umfasst neben der ersten Funktion F1A nur den zweiten Zusatzprogrammteil S1AE. Sowohl die Schreiboperationen zu den Zeitpunkten A, B und C als auch der Beginn der Abarbeitung der ersten Funktion zu einem Zeitpunkt C01 werden von der Überwachungseinheit GSI detektiert, wobei die Werte der ersten Variablen V1, der vierten Variablen V4 und der zweiten Variablen V2 ebenfalls mitgelesen werden. Nach dem Start der ersten Funktion F1A zu dem Zeitpunkt C01 wird mittels der ersten Funktion zu dem Zeitpunkt C41 der Wert aus dem Adressbereich der zweiten Variablen V2 eingelesen. Zu dem Zeitpunkt E und dem Zeitpunkt F1 werden der Wert der ersten Puffervariablen und der Wert der zweiten Puffervariablen in den Pufferspeicher BU mittels der Überwachungseinheit GSI geschrieben. Ferner wird mittels der Überwachungseinheit GSI die zweite Funktion F2A zu dem Zeitpunkt H gestartet. Anschließend wird mittels der zweiten Funktion F2A zu einem Zeitpunkt H01 der Wert der ersten Puffervariablen und zu einem Zeitpunkt H02 der Wert der zweiten Puffervariablen aus dem Pufferspeicher BU gelesen. Die weitere Ausführung ist mit dem in Zusammenhang mit der Figur 5 erläuterten Ausführungen identisch.

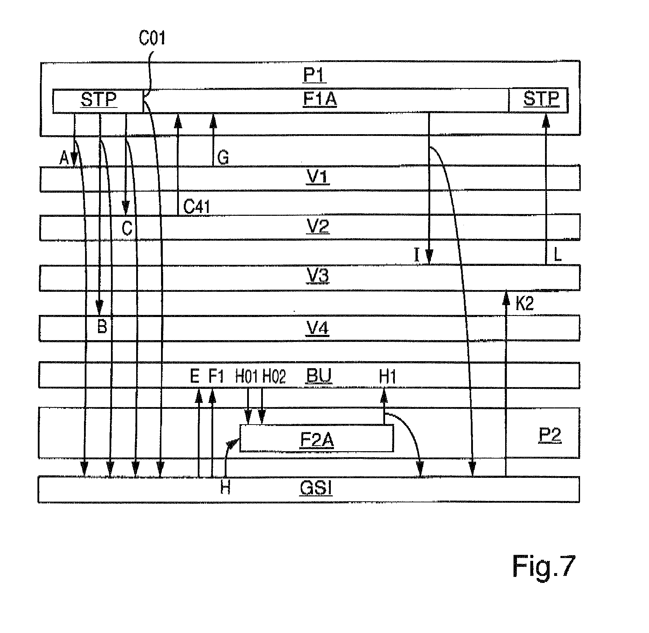

Die Abbildung der Figur 7 zeigt in einem vierten Beispiel ein weiteres Zeitdiagramm des Ablaufs der verschiedenen Lese- und Schreiboperationen auf die einzelnen Bereiche des Speichers SP1 ausgehend von dem ersten Rechenkern P1 und dem zweiten Rechenkern P2. Im Folgenden werden nur die Unterschiede zu der Darstellung in der Figur 6 erläutert. Die Funktionalität des zweiten Zusatzprogrammteils S1AE wird nunmehr von der Überwachungseinheit GSI mit übernommen. Hierdurch ist der zweite Zusatzprogrammteil S1AE obsolet. Zu dem Zeitpunkt H1 an dem der Wert der dritten Puffervariablen in den Pufferspeicher BU geschrieben wird, wird von der Überwachungseinheit GSI ebenfalls der gleiche Wert eingelesen. Des Weiteren wird zu einem Zeitpunkt I, an dem von der ersten Funktion F1A der Wert der dritten Variablen V3 in den zugeordneten Adressbereich geschrieben wird, mittels der Überwachungseinheit GSI der Wert der dritten Variablen V3 mitgelesen und zu dem Zeitpunkt K2 in den Speicherbereich der dritten Variablen V3 geschrieben. Anschließend wird der Wert der dritten Variablen V3 mittels des Steuerprogramms aus dem der dritten Variablen V3 zugeordneten Speicherbereich zu dem Zeitpunkt L gelesen.

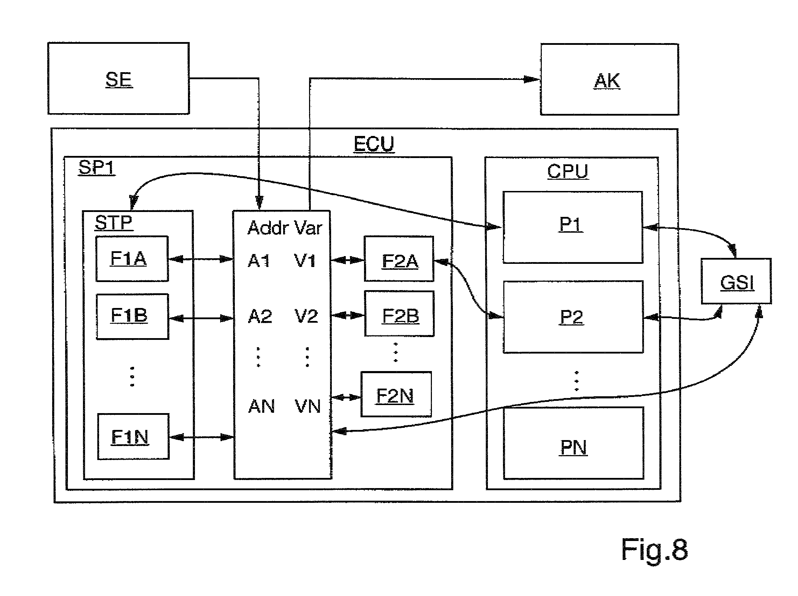

Die Abbildung der Figur 8 zeigt eine vierte Ausführungsform des erfindungsgemäßen Verfahrens. Im Folgenden werden nur die Unterschiede zu der Darstellung in der Figur 1 erläutert. Außerhalb des Steuergerätes ECU ist die Überwachungseinheit GSI angeordnet. Die Überwachungseinheit GSI ist sowohl mit dem ersten Rechenkern P1 als auch mit dem zweiten Rechenkern P2 als auch mit dem Speicherbereich für die Werte der Variablen des Speichers SP1 verschaltet. Hierdurch lassen sich die Aufrufe der ersten Funktionen F1A, F1B und F1N mittels der Überwachungseinheit GSI genauso wie die Schreib-/Leseoperationen von Werten der Variablen detektieren.

## Patentansprüche

1. Verfahren zur Beeinflussung eines Steuerprogramms (STP) eines Steuergerätes (ECU), wobei das Steuergerät (ECU) einen ersten Speicher (SP1) zur Aufnahme des Steuerprogramms (STP) aufweist, und
das Steuerprogramm (STP) eine Vielzahl von ersten Funktionen (F1A, F1B, F1C, ...F1N) aufweist, wobei wenigstens eine der ersten Funktionen (F1A, F1B, F1C, ...F1N) für die Steuerung eines Aktuators (AK) ausgebildet ist, und
eine Vielzahl von Variablen (V1, V2, V3, V4, ...VN) vorgesehen sind und jeder der Variablen (V1, V2, V3, V4, ...VN) eine Speicheradresse (A1, A2, ....AN) zugeordnet ist, wobei zwischen den Variablen (V1, V2, V3, V4, ...VN) und den ersten Funktionen (F1A, F1B, F1C, ...F1N) eine vorgegebene Zuordnung ausgebildet ist, und
das Steuergerät einen Prozessor oder mehrere Prozessoren (CPU) aufweist und der Prozessor bzw. die Prozessoren insgesamt eine Vielzahl von Rechenkernen (P1, P2,... PN) aufweisen, und
in einem ersten Rechenkern (P1) das Steuerprogramm (STP) mit den ersten Funktionen (F1A, F1B, F1C, ...F1N) ausgeführt wird,
**dadurch gekennzeichnet, dass**
während der Ausführung des Steuerprogramms (STP) in einem zweiten Rechenkern (P2) eine zweite Funktion (F2A) abgearbeitet wird, wobei die zweite Funktion (F2A) wenigstens teilweise eine zu dem Steuerprogramm (STP) unterschiedlichen Programmkode aufweist, und mittels der zweiten Funktion (F2A) ein Wert einer der ersten Funktionen (F1A, F1B, F1C, ...F1N) zugeordneten Variablen (V1, V2, V3, V4, ...VN) verändert wird und anschließend auf den geänderten Wert von dem Steuerprogramm (STP) zugegriffen wird.

2. Verfahren nach Anspruch 1, **dadurch gekennzeichnet, dass** mittels eines Kontrollprogramms (MON1) und / oder eines Zusatzprogrammteils (S1AS, S1AE) und / oder einer Überwachungseinheit (GSI) Aufrufe von ersten Funktionen (F1A, F1B, F1C, ...F1N) und / oder das Funktionsende von ersten Funktionen (F1A, F1B, F1C, ...F1N) detektiert werden, wobei das Kontrollprogramm (MON1) auf dem zweiten Rechenkern (P2) implementiert und abgearbeitet wird und / oder das Steuerprogramm (STP) durch den Zusatzprogrammteil (S1AS, S1AE) ergänzt wird.

3. Verfahren nach Anspruch 2, **dadurch gekennzeichnet, dass** die Überwachungseinheit (GSI) als Schnittstelleneinheit ausgeführt ist.

4. Verfahren nach Anspruch 2 oder Anspruch 3, **dadurch gekennzeichnet, dass** die Überwachungseinheit (GSI) als eine von dem Steuergerät (ECU) getrennte Einheit ausgebildet ist.

5. Verfahren nach einem der Ansprüche 2 bis 4, **dadurch gekennzeichnet, dass** die Überwachungseinheit (GSI) und / oder das Kontrollprogramm (MON1) ein festverdrahtetes Programm zur Detektion der Aufrufe der ersten Funktionen (F1A, F1B, F1C, ...F1N) aufweist.

6. Verfahren nach einem der vorangegangenen Ansprüche, **dadurch gekennzeichnet, dass** die Abarbeitung der zweiten Funktion (F2A) wenigstens teilweise parallel zu der Abarbeitung einer der ersten Funktionen (F1A, F1B, F1C, ...F1N) erfolgt.

7. Verfahren nach einem der vorangegangenen Ansprüche, **dadurch gekennzeichnet, dass** die Abarbeitung der zweiten Funktion (F2A) durch einen Triggerbefehl gestartet wird.

8. Verfahren nach einem der vorangegangenen Ansprüche, **dadurch gekennzeichnet, dass** die Abarbeitung der zweiten Funktion (F2A) wenigstens teilweise parallel in mehreren zweiten Rechenkernen (P2, PN) durchgeführt wird.

9. Verfahren nach einem der vorangegangenen Ansprüche, **dadurch gekennzeichnet, dass** von der zweiten Funktion (F2A) zu einem ersten Zeitpunkt der Wert einer der ersten Funktionen (F1A, F1B, F1C, ...F1N) zugeordneten Variablen berechnet und / oder aus einer Speicheradresse eingelesen wird und nach der Berechnung oder der Änderung des Wertes zu einem zweiten Zeitpunkt der berechnete oder geänderte Wert in die der Variablen (V1, V2, V3, V4, ..VN) zugeordneten Speicheradresse (A1, A2, ...AN) zurückgeschrieben wird und zu einem dritten Zeitpunkt von dem Steuerprogramm (STP) der Wert aus der Speicheradresse (A1, A2, ...AN) ausgelesen wird, wobei der zweite Zeitpunkt später als der erste Zeitpunkt und der dritte Zeitpunkt später als der zweite Zeitpunkt liegt.

10. Verfahren nach Anspruch 9, **dadurch gekennzeichnet, dass** das Kontrollprogramm MON1 oder der Zusatzprogrammteil S1AE, vorzugsweise durch eine Verzögerung der Abarbeitung des Steuerprogramm (STP), sicherstellt, dass der zweite Zeitpunkt später als der erste Zeitpunkt und/oder der dritte Zeitpunkt später als der zweite Zeitpunkt liegt.

11. Verfahren nach einem der vorangegangenen Ansprüche, **dadurch gekennzeichnet, dass** von der zweiten Funktion (F2A) zu einem ersten Zeitpunkt der Wert aus einer der Variablen (V1, V2, V3, V4, ..., VN) zugeordneten Speicheradresse (A1, A2, ...AN) und / oder aus einer zugeordneten Speicheradresse eines Pufferbereichs (BU), in denen sich ein Abbild der Werte der Variablen befindet, eingelesen wird, wobei der erste Zeitpunkt nach der Detektion des Funktionsaufrufs der ersten Funktion (F1A) liegt und der erste Zeitpunkt von der Überwachungseinheit (GSI) und / oder des Kontrollprogramms (MON1) und / oder des Zusatzprogrammteils (S1AS, S1AE) ermittelt wird und von der Überwachungseinheit (GSI) und / oder des Kontrollprogramms (MON1) und / oder des Zusatzprogrammteils (S1AS, S1AE) sichergestellt wird, dass sich der Wert der Variablen (V1, V2, V3, V4, ...VN) an der zugeordneten Speicheradresse (A1, A2, ...AN) oder des Abbilds der Variablen (V1, V2, V3, V4, ..., VN) in der zugeordneten Speicheradresse des Pufferbereichs (BU) in dem Zeitraum zwischen dem Aufruf der ersten Funktion (F1A, F1B, F1C, ...F1N) und dem ersten Zeitpunkt nicht verändert.

12. Verfahren nach einem der Ansprüche 2 bis 11, **dadurch gekennzeichnet, dass** mittels der Überwachungseinheit (GSI) und / oder des Kontrollprogramms (MON1) und / oder des Zusatzprogrammteils (S1AS, S1AE) die Beeinflussung der Werte der Variablen durch die zweite Funktion (F2A) derart synchronisiert wird, dass mittels des Steuerprogramms (STP) auf die Werte der Variablen (V1, V2, V3, V4, ..., VN) nach der Abarbeitung der zweiten Funktion (F2A) oder nach den mittels der zweiten Funktion (F2A) durchgeführten Änderungen zugegriffen wird.

13. Verfahren nach einem der Ansprüche 2 bis 12, **dadurch gekennzeichnet, dass** mittels der Überwachungseinheit (GSI) und / oder des Kontrollprogramms (MON1) und / oder des Zusatzprogrammteils (S1AS, S1AE) die Verteilung der zweiten Funktion (F2A) auf ein oder mehrere zweite Rechenkerne (P2, PN) gesteuert wird.

14. Verfahren nach einem der vorangegangenen Ansprüche, **dadurch gekennzeichnet, dass** die zweite Funktion (F2A) in einer Endlosschleife integriert ist oder eine mehrfache Abarbeitung der zweiten Funktion (F2A) durch einen Triggerimpuls gestartet wird.

15. Verfahren nach einem der vorangegangenen Ansprüche, **dadurch gekennzeichnet, dass** mehrere zweite Funktionen (F2A, F2B, ...F2N) vorgesehen sind.

16. Verfahren nach Anspruch 15, **dadurch gekennzeichnet, dass** mittels der Überwachungseinheit (GSI) eine der zweiten Funktionen (F2A, F2B, ...F2N) auf einer externen Berechnungseinheit abgearbeitet wird.

17. Verfahren nach Anspruch 11, **dadurch gekennzeichnet, dass** mittels einer Überwachungseinheit (GSI) und / oder des Kontrollprogramms (MON1) ein Abbild der Werte der Variablen (V1, V2, V3, V4, ...VN), die identisch zu den Werten der Variablen zum Zeitpunkt des Aufrufes der ersten Funktion (F1A) sind, in den Pufferbereich (BU) abgelegt wird.

18. Verfahren nach einem der Ansprüche 2 bis 12, **dadurch gekennzeichnet, dass** die mehreren zweiten Funktionen unterschiedliche Prioritäten aufweisen und mittels der Überwachungseinheit (GSI) und / oder des Kontrollprogramms (MON1) und / oder des Zusatzprogrammteils (S1AS, S1AE) die Verteilung der zweiten Funktionen (F2A, F2B, ...F2N) auf ein oder mehrere zweite Rechenkerne (P2, ...PN) anhand der unterschiedlichen Prioritäten der zweiten Funktionen (F2A, F2B, ...F2N) gesteuert wird und / oder eine oder mehrere zweite Funktionen (F2A, F2B, ...F2N) auf dem einen oder mehreren zweiten Rechenkernen (P2,.. PN) pausiert werden, um weitere zweite Funktionen (F2A, F2B, ...F2N) mit einer höheren Priorität auf den zweiten Rechenkernen (P2, ...PN) zu bearbeiten.

19. Verfahren nach einem der vorangegangenen Ansprüche, **dadurch gekennzeichnet, dass** mittels der Überwachungseinheit (GSI) und / oder des Kontrollprogramms (MON1) und / oder des Zusatzprogrammteils (S1AS, S1AE) ein zweiter Rechenkern (P2, ...PN) nur dann gestartet wird, wenn der ausgewählte zweite Rechenkern (P2, ...PN) eine zweite Funktion (F2A, F2B, ...F2N) bearbeiten soll.
